# EUROPEAN PATENT SPECIFICATION

(11) **EP 2 711 947 B1**
(45) Date of publication and mention of the grant of the patent: **23.01.2019**
(21) Application number: 13182981.4
(22) Date of filing: 04.09.2013
(51) Int. Cl.: H01F 38/18, F03B 13/10

(54) **A power transfer device**
Leistungsübertragungsvorrichtung
Dispositif de transfert de puissance

(30) Priority: 24.09.2012 GB 201216961; 24.09.2012 GB 201216963
(43) Date of publication of application: 26.03.2014
(73) Proprietor: Rolls-Royce plc, London SW1E 6AT (GB)
(72) Inventor: Anthony, John, Bishopsteignton Devon TQ14 9PS (GB); Chong, Ellis, Derby DE23 3TU (GB); Palethorpe, Benjamin, Nottingham Nottinghamshire NG7 5JH (GB); Hartley, Andrew, Ashbourne Derbyshire DE6 2HB (GB)
(74) Representative: Rolls-Royce plc

(56) References cited:
- EP-A2- 0 587 142
- EP-A2- 1 742 235
- WO-A1-2012/039635
- WO-A1-2012/055443
- WO-A2-2010/078903
- GB-A- 2 431 437
- US-A1- 2011 316 282

## Description

### Technical Field of Invention

This invention relates to a power transfer device with particular utility for sub-aquatic applications. In particular, the power transfer device is for sub-aquatic turbines which are rotatable to face flows from different directions, such as tidal turbines.

### Background of Invention

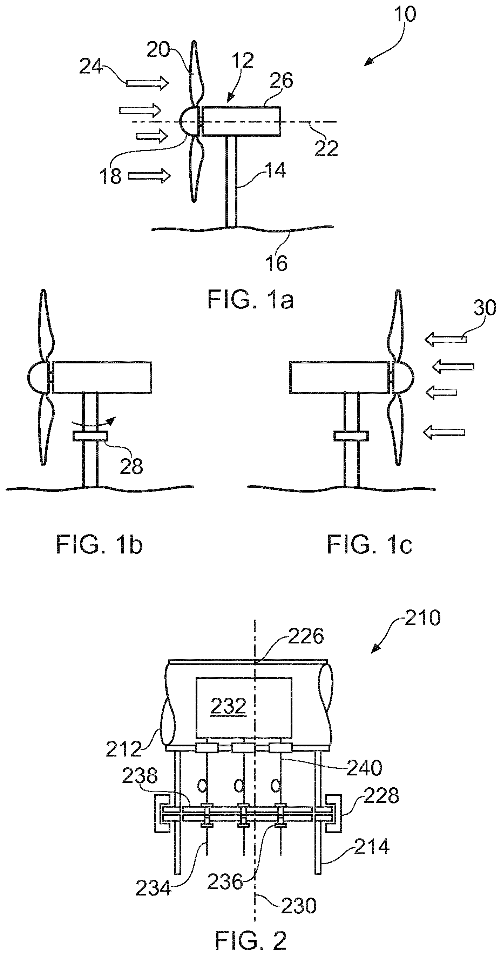

Sub-aquatic power generating apparatuses are generally well known and currently the subject of much research and development. One type of sub-aquatic power generating apparatus is the tidal turbine generator 10 shown in Figures 1a, 1b and 1c. This generator 10 includes a turbine 12 mounted on a support structure 14 which is fixed, either by gravity or some other suitable fixing means, to the sea bed 16. The turbine 12 includes a rotor 18 having a plurality of turbine blades 20 which are arranged to provide rotative force about a turbine axis 22 when placed in an appropriate flow of water 24. The rotor 18 is used to drive an electrical machine in the form of an electromagnetic generator (not shown) which is housed within the so-called nacelle or casing 26 of the turbine 12. The electromagnetic generators currently used in tidal turbines are generally conventional in that they convert the rotational mechanical movement provided by the rotor into electrical energy via an electromagnetic machine. The generated electrical energy is exported into an electrical network or grid by a suitable arrangement and connection of cables (not shown).

As will be appreciated by the skilled person, the efficiency of many sub-aquatic turbine arrangements, and other types of sub-aquatic power generators, is affected by the direction of the flow 24 relative to the orientation of the power generating apparatus. Hence, it is generally desirable to provide a power generating apparatus with some functionality to allow for varied orientation of the machine in respect to the flow conditions. Such requirements may be minor changes in the flow conditions or bidirectional changes in tidal waters.

The support structure 14 is in the form of a columnar structure or pylon which extends from the sea bed 16 in a generally vertical direction so as to provide a platform to which the power generating module can be adaptably attached to when in use. The attachment of the support structure 14 to the sea bed 16 may be achieved by any suitable means such as piles buried into the sea bed 16 or it may be constructed so as to have a mass suitable for gravitational anchoring of the power generating apparatus. It will be appreciated that the support structure 14 may advantageously include suitable strengthening or support members and may be take a preferable geometric form such as a tripod for example.

The adaptable attachment 28 between the turbine 12 and support structure 14 is such that the turbine 12 may be placed in a fixed configuration relative to the support structure 14, and thus the tidal flow, or in a rotatable configuration so that the turbine 12 may be rotated and orientated relative to a directional flow of water 24 in a predetermined way. Hence, the turbine can be held in a first orientation for a first flow direction, as shown in Figure 1b, before being placed in a second orientation, as shown in Figure 1c, in which the turbine 12 has been rotated by 180 degrees about the vertical axis of the support structure 14, to harness power from a second directional flow 30. In practice, the two flows may correspond to ebb and flood tides in a given location or more minor changes in a given directional flow. It will be appreciated that having a continuously variable rotation is particularly advantageous as it allows the orientation of the turbine to be adjusted to account for tidal flows which do not oppose each other by 180 degrees and for minor differences in directional flows.

WO2010/078902 describes a rotary mount for a turbine, such as a subsea tidal stream turbine. The mount comprises a fixed part, and a rotary part configured for connection to said turbine, the rotary part being mounted for rotation relative to the fixed part. The fixed part comprises a fixed conductor, and the rotary part comprises rotary conductor, the rotary conductor being electrically connected to the turbine and arranged for rotation relative to the fixed conductor. The arrangement is configured such that electrical energy generated by the turbine is transferred via the rotary conductor to the fixed conductor either by direct conduction, or by induction, whilst permitting rotation therebetween.

US2013224013 describes a transformer for the transfer of electrical power from a nacelle of a horizontal-axis wind turbine to a turbine tower of said wind turbine whereby the nacelle is in revolute attachment to the tower, comprising: a primary winding adapted for attachment to the nacelle, and a secondary winding adapted for attachment to the turbine tower, which windings are in revolute alignment with each other, and configured for transfer of electrical power by induction from the primary winding to the secondary winding.

US2009121487 describes an energy conversion system comprising a support structure upstanding within a volume of water subject to the occurrence of both wave motion and tidal flow. A first apparatus is mounted from the support for deriving usable power from the tidal flow, and a second apparatus operationally supported relative to the support structure for deriving usable power from the occurrence of wave motion independently from that derived from tidal flows. A power transfer apparatus for facilitating the transfer of usable powers to a land based location is also described.

EP1742235 describes a power generating system comprising an electrical generator carried by a rotating frame and stationary frame. In this a rotating transformer is used to transfer the power from the rotating frame to the stationary frame. The rotating transformer comprising a stator and a rotor each have their own respective windings and arranged to create a magnetic flux between the stator and the rotor, and power is transferred across a gap through the stator and rotor.

One issue which must be accommodated by a rotational power generating apparatus is the electrical connection through which the generated electrical power is transported. The present invention seeks to address this issue and provide an improved power generating apparatus which is rotatable about a support structure but which can provide a suitable electrical connection.

### Statements of Invention

The present invention provides a power transfer device and method of operation according to the appended claims.

In a first aspect, the present invention provides an electrical power transfer device for transferring power between two coaxial relatively rotatable cores, comprising an outer core having a magnetic flux guide, an outer electrical winding and a cavity for receiving an inner core; the inner core located at least partially within the cavity, the inner core having a magnetic flux guide and an inner winding, wherein the inner and outer cores are coaxially nested along a principal axis and characterised in that: the inner and outer cores are arranged to be axially displaceable along the principal axis so as to move between a power transfer configuration in which the magnetic flux guides of the inner and outer cores abut one another for transferring power, and a rotatable configuration in which the inner and outer cores are separated by a first distance for enabling the relative rotation of the inner and outer cores.

Embodiments of the invention are defined in dependent claims 2-6. In a second aspect, the present invention relates to A method of operating the power transfer device as claimed in any preceding claim, comprising the steps of: placing the inner core in the power transfer configuration relative to the outer core such that the inner and outer cores are axially mating and abutting one another; axially separating the inner and outer cores to place the cores in the rotatable configuration in which the inner and outer cores are separated by the first distance, wherein; rotating the inner and outer cores relative to each other; axially mating the inner and outer cores to place them in the power transfer configuration in a new rotational position of the inner and/or outer core and wherein that the inner and outer cores are abutting one another, and transferring power.

### Description of Drawings

Examples which are not part of the invention and embodiments of the invention will now be described with the aid of the following drawings of which:
Figures 1a-c show a rotatable tidal turbine
Figure 2 shows a portion of a tidal turbine in cross section
Figures 3a-c show a longitudinal and axial cross section of a power transfer device which is included to aid the understanding of the invention only.
Figure 4 shows an alternative arrangement of the power transfer device which is included to aid the understanding of the invention only.
Figure 5 shows another alternative arrangement of the power transfer device which is included to aid the understanding of the invention only.
Figures 6 and 7 show alternative arrangements for an inner core of a power transfer device which are included to aid the understanding of the invention only.
Figures 8a and 8b show constructional details of a magnetic core of a power transfer device which are included to aid the understanding of the invention only.
Figures 9a-c show a tiered power transfer device according to the present invention in three configurations: a) power transferring; b) rotatable; and, c) during assembly.
Figure 10 shows a power transfer device according to the present invention.
Figure 11 shows a fault tolerant power transfer device which is included to aid the understanding of the invention only.

### Detailed Description of Invention

Figure 2 shows a schematic cross-section of portion of an underwater power generating apparatus 210 in the form of a tidal generator which is similar in many respects to the unit shown in Figures 1a, 1b and 1c. Thus, there is shown the nacelle 226 of an underwater turbine 212 and a support structure 214 which are mechanically coupled via an attachment 228 which can be adapted to allow the turbine 212 to be rotated about a vertical and principal axis 230 when required in accordance with a directional flow.

Within the nacelle 226 there is an electrical transformer 232 which converts the electricity generated by an electrical generator housed within the nacelle (not shown). The transformer 232 is electrically connected to a grid or some other network via cables 234 which terminate within the stationary support structure 214 via so called wet mate connectors 236. For the present purpose, the wet mate connectors can simply be thought of as plug and socket devices which can be mated underwater.

The wet mate connectors 236 are held in a stationary position relative to the support structure 214 on a so called stab plate 238 and so rotate relative to the nacelle 226 when the power generating apparatus 212 is rotated to face a different direction, as described in Figure 1a, 1b and 1c. To allow for the relative rotation between the nacelle 226 and the wet mate connectors 236, the power generating apparatus 212 includes bridging cables 240 which link between the nacelle connectors 242 and the wet mate connectors 236.

Although the wet make connectors 236 function adequately, they are expensive and are limited in the voltage rating which can be limited to allow for the wet mate connection. Further, they are limited in the range of motion which can be accommodated due to the bridging cables.

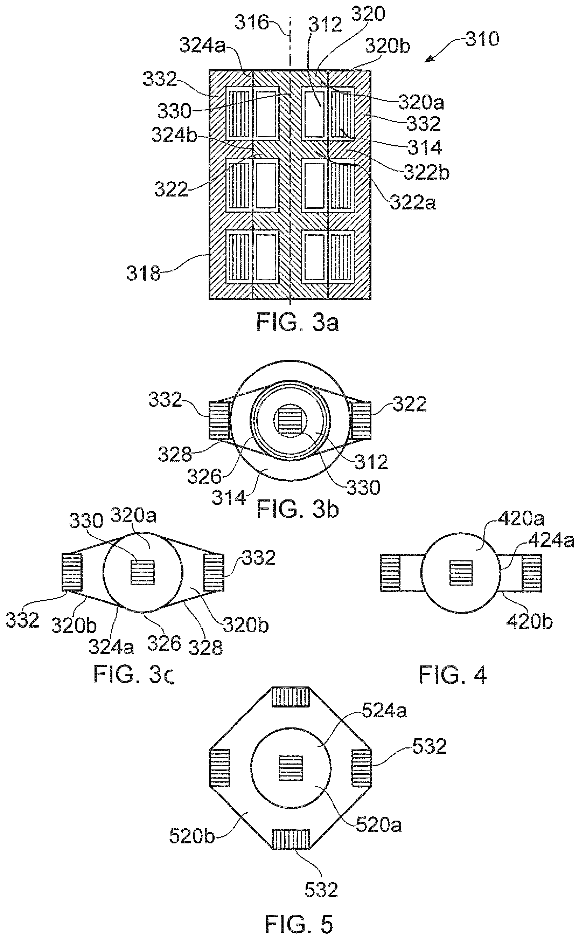

Figures 3a and 3b show a power transfer device 310 which is described to aid the understanding the invention. The power transfer device 310 includes a plurality of inner electrical windings 312 and a plurality of outer electrical windings 314 which are radially separated with respect to a principal axis 316 of the power transfer device 310. There are three respective sets of inner 312 and outer 314 windings arranged in axial series so as to provide a three phase power transfer device. Each of the three winding sets can be taken to be electromechanically identical for the purpose of the following explanation.

Each phase includes a magnetic flux guide in the form of a ferromagnetic core 318 arranged around the inner 312 and outer 314 windings which provides a high level of flux linkage when the electrical coils of the windings 312, 314 are energised with an alternating electrical current, AC. That is, the magnetic flux guide provides, with the exception of an air gap, a closed magnetic loop or circuit around the windings. The (single phase) core 318 includes end caps 320, 322 which are axially spaced along the principal axis 316 with the radially inner 312 and outer 314 windings located therebetween. It will be appreciated that axially adjacent windings, i.e. the phases, share end caps.

Each end cap 320, 322 includes an annular air gap 324a, 324b which defines respective radially inner 320a, 322a and outer 320b, 322b end cap portions which form part of inner and outer cores respectively. Thus, the inner core 326 is defined, at least in part, by the radially inner end caps 320a, 322a and the inner electrical winding 312, and the outer core 328 is defined, at least in part, by the radially outer end caps 320b, 322b and the outer electrical windings 314. The annular air gap within the end caps is centred on the principal axis 316 of the power transfer device 310 such that the inner core is rotatable, relative to the outer core, about the principal axis.

The inner end caps 320a, 322a are connected by at least one inner flux guide path in the form of a ferromagnetic central core 330, the longitudinal axis of which defines the principal axis 316 of the power transfer device and which provides a magnetically conductive core around which the inner winding 312 is wound. In the present example, the central core is a laminated structure having a square cross-section but it will be appreciated that other configurations are possible, as described below.

The outer end caps 320b, 322b are connected by two outer flux guide paths in the form of axially extending ferromagnetic outer runners 332 which are circumferentially separated from one another by approximately 180 degrees so as to oppose each other on opposite sides of the central core 330.

The outer runners 332 are located on the outside of the outer windings 314, thus, the centre core 330, upper 320 and lower 322 end caps and outer runners 332 electromagnetically envelope the two windings so as to form a magnetic circuit and provide a high level of flux linkage when in use.

The inner 326 and outer 328 cores are arranged so as to be rotatable relative to one another about the principal axis 316. Thus, the power transfer device 310 can be mounted within the connecting portion of the turbine support 214 and allow the nacelle 226 to be freely and continuously rotated about the principal axis 316 without mechanical interference from the connecting cables. This configuration also means that the power can be transferred between the inner 326 and outer 328 cores, regardless of the rotational offset between the two and allows the turbine 212 to face in any chosen direction.

Figure 3c shows the cross section of the ferromagnetic core 318 shown in Figure 3b but without the windings 312, 314 so that the construction of the core 318 can be seen more readily. The inner end cap 320a is a generally circular plate having axially extending thickness so as to provide a circumferential face which is perpendicular to the face surface of the cap 320a. The central core 330 extends from a junction at the centre of the inner end cap 320a and is substantially square in cross-section and is made up from axially extending laminations.

The outer end cap 320b is in the form of a pair of plates having axial thickness which extend radially outwards from the circumferential edge of the inner end cap on opposing sides thereof. The outer plates each have inner arcuate edges which correspond to and are separated from the circumferential edge of the inner cap 320a so as to form the air gap 324a which is substantially constant therearound. The arcuate faces extend through an arc of approximately 110 degrees so as to partially envelope the inner end cap 320a.

The outer end caps extend radially outwards from the air gap 324a reducing in width so as to be convergent towards the distally located outer runners 332. The outer runners 332 are rectangular in cross section and extend perpendicularly from the junction with the outer end cap 320b to pass axially down the outside of the outer electrical winding 314. The outer runners 332 are rectangular having the major side facing the electrical winding 314 and, as with the central core 330, are constructed from laminations.

As will be appreciated, by air gap 324a, b it is meant that the inner 326 and outer 328 cores are mechanically separated such that they can rotate relative to one another. In the above described example, the separation is between approximately 3mm and 5mm which is sufficient to allow for mechanical tolerances in the manufacture and alignment of the cores etc. However, the inner and outer cores may be in direct contact and the air gap will be a notional one defined by a boundary or split between the two cores. In other examples, the gap may be larger than 5mm as will be appreciated. Where the inner and outer cores are separated by a gap, this may be filled with a medium other than air, such as the water in which the apparatus resides. Alternatively, the air gap 324a may be filled, or partially filled, by a semi-permeable material such as an iron glass fibre epoxy with a low relative permeability.

In another example which is not part of the present invention, as shown in Figure 4, the radially extending outer end caps 420b may be straight rather than convergent meaning that the air gaps 424a which define the inner cap 420a only extend through approximately 30 degrees.

The radially opposing branches of the outer end cap 420b are mechanically connected by a housing to provide the overall arrangement with the necessary strength and rigidity required to maintain the air gap. The mechanical connection can be any suitable type such as a providing a one or more connecting rods between the two components which are of a suitable strength and dimension to prevent deleterious movement.

A yet further example which is not part of the present inventionis shown in Figure 5 in which there are provided four axially extending outer runners 532, each of a similar construction to the outer runners 332 described with reference to Figures 3 and 4. The outer end cap 520b in this instance is a substantially square plate with clipped corners and having a central circular aperture which is sized to encircle the inner end cap 320a in a coplanar arrangement so as to form the air gap 524a therebetween. The outer runners 532 are rectangular in cross section and extend perpendicularly from the clipped corners of the end cap 520b.

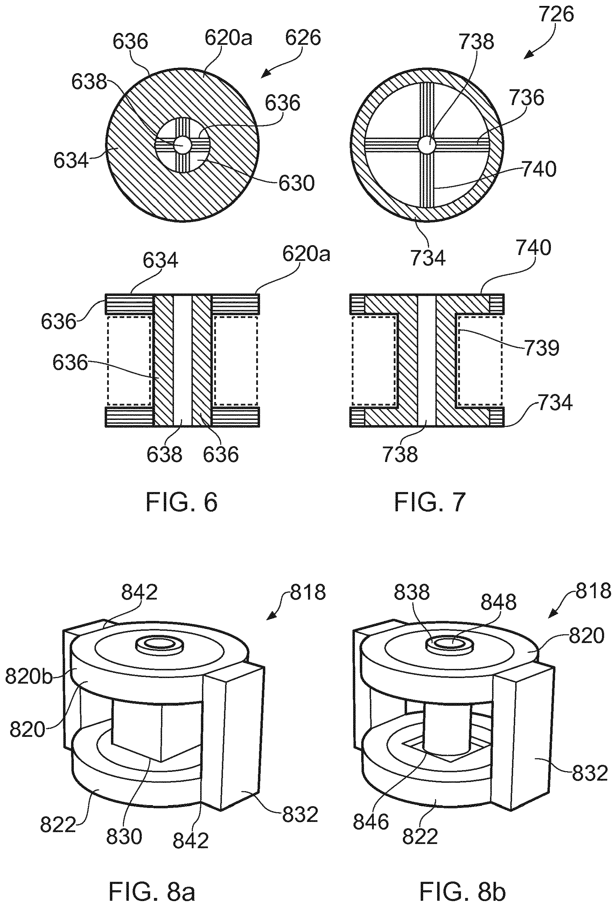

Details of two different inner pole constructions are shown in Figures 6 and 7 respectively. Referring firstly to Figure 6, there is shown an end view and cross section of an inner pole 626 having an inner end cap 620a in the form of an annular cap 634 made up from ring laminations which are stacked axially to provide the air gap at the circumferential edge 636 thereof. The central core 630 is made up from four axially extending inner runners 636which are set in quadrature about and attached to a central member 638 which provides structural support to the arrangement. The inner runners 636 are rectangular in cross section with the radially inner minor face abutting the central member 638 and the distal end portions of the radially outer minor faces forming a junction with the inner edge of the end cap annulus 634.

Figure 7 shows an alternative construction of an inner pole 726 in which the inner runners 736 are C-shaped (or E shaped for multiphase arrangements) having an axially extending portion 739 and perpendicular arms 740 which radially extend towards the annular end cap 734, thereby providing the end cap with a spoked configuration. The annular end cap 734 is similar to that described in relation to Figure 6, but with a face surface having a reduced surface area. Keyed surfaces can be used to locate adjacent parts of the arrangement, or the central structural member 738 could have horizontal protrusions, for example, plates or bars, which pass substantially into the inner runners 739 to secure them and transmit structural loads. Ideally, because the laminations are on orthogonal planes, the horizontal portion of the inner runners will protrude into or through the ring laminations so as to enable good flux transfer.

In another example, the inner core may not have an annular end cap. In such an arrangement, the air gap is provided between the radially outer surfaces of the perpendicularly extending arms of the inner core and the end cap of the outer core. In this case the inner core would consist of C-shaped, or E-shaped, laminations arranged in a spoke fashion around a central structural member. In a further variation, annular caps are provided on both the inner end cap and outer end cap. This arrangement would enable the magnetic circuit to remain intact regardless of any potential eccentricity between the inner and outer cores.

In Figures 8a and 8b there are shown two representations of a core arrangement 818. Thus, in Figure 8a there is shown a core 818 having end caps 820, 822, a central core 830 and outer runners 832. It can be seen that the junction between the outer runners and the outer end caps is formed from a keyed arrangement 842 in which the outer runners 832 are snugly accepted into a recess which has been placed in the outer circumferential surface of the outer end cap 320b. As can be seen from Figure 8b, where the central core 830 has been removed, the central core is also received in a recess 846 so as to provide a keyed junction.

The central core structural member 838 which extends up the centre central core 830 is provided with a passageway 848 which extends from one end of the core 818 to the other. The passageway 848 is sized so as to receive a cable or the like which can be used to winch the turbine into place or help provide a guide for inserting the inner core into the outer core. It is also to be noted that the passageway 848 extends along and is centred on the principal axis to allow the inner core to rotate relative to the outer core whilst being installed.

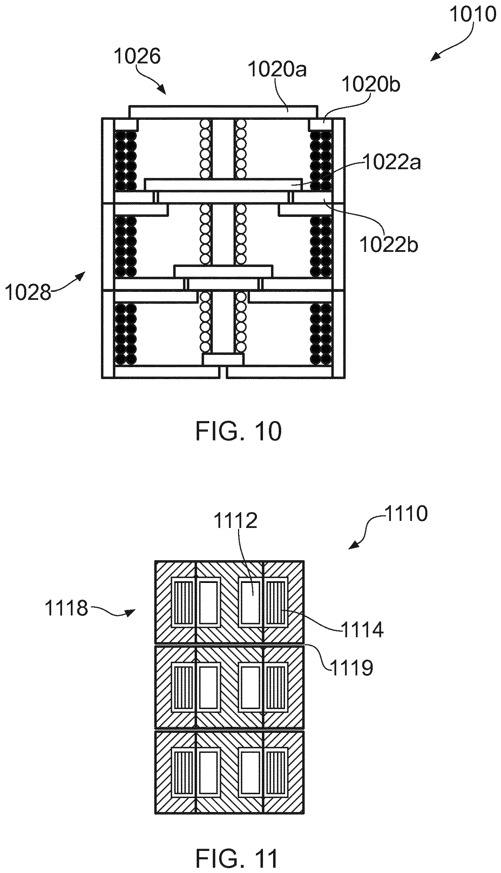

A yet further example which is not part of the present invention is shown in Figure 11 in which there is shown a device 1110 having three individual cores arranged in axial series. Thus, each core has a winding set comprising the inner 1112 and outer 1114 windings and an individual core 1118 such that the end caps are not shared as in the previously described examples. The cores are separated by magnetic isolators 1119 made from nonmagnetic material having a low magnetic permeability. This is particularly advantageous as it allows each core to represent a phase of a three phase system with each phase being electrically and magnetically isolated from one another, thereby providing a so called fault tolerant machine.

In all of the described embodiments of the invention, the electrical windings are conventional windings made from coils of a high conductivity metal such as copper or aluminium. The coils are encapsulated in vacuum impregnated epoxy to provide durable and water proof structure. In the described embodiment of the invention, the inner winding is a low voltage winding and is thus connected to the electrical supply of the turbine, and the outer winding is high voltage connected to the grid. Having the inner winding as the lower voltage winding is a particularly advantageous arrangement as it reduces the voltage stress between the windings and the magnetic core which would be earthed in practice. However, other arrangements may be preferable depending on the application of the device. For example, it may be advantageous for the turbine to be connected to the outer core in which case this winding will be the lower voltage winding. It will be appreciated that various voltages and turn ratios can be considered for different applications. However, typical values for a tidal turbine are to have the low voltage side rated for 690V to 6.6kV, and the high voltage side rated for 3.3kV to 33kV. It will be appreciated that in this context, low and high voltages are used relatively rather than the conventional definition.

The material of the core may be any suitable material which meets the requirements which can be understood for the above description. For example, the parts of the core which form magnetic flux path may be constructed from a high magnetic permeability material such as carbon steel or the like.

With reference to Figure 3, the power transfer device is assembled by aligning the inner core 326 with the aperture which passes through the outer core 328 before being lowered into place. The alignment may be achieved with mechanical aids (not shown) or by registering the relative positions of the two parts as they are brought together.

In the case of a tidal turbine, the inner core may be mounted to the turbine unit and lowered into the water to meet the support structure. The turbine and support structure may each have corresponding mechanical guides which centre the inner core over the outer core so that it can be inserted as required without damage to the cores or windings.

In use, the turbine is operated as any other transformer would be. That is, the windings connected to the electrical output of the turbine and energised so as to result in an alternating flux linkage with the outer coil which induces a voltage in the other winding, thereby transferring the associated electrical energy to the connected grid.

To rotate the turbine, the power is switched off (although this is not essential) and the turbine is rotated by any suitable means. Once the rotation is complete, the turbine can re-energise the windings and power can again be exported in the new orientation. It will be appreciated, that in some embodiments of the invention, it may be possible to rotate the turbine by exerting a torque between the inner and outer windings.

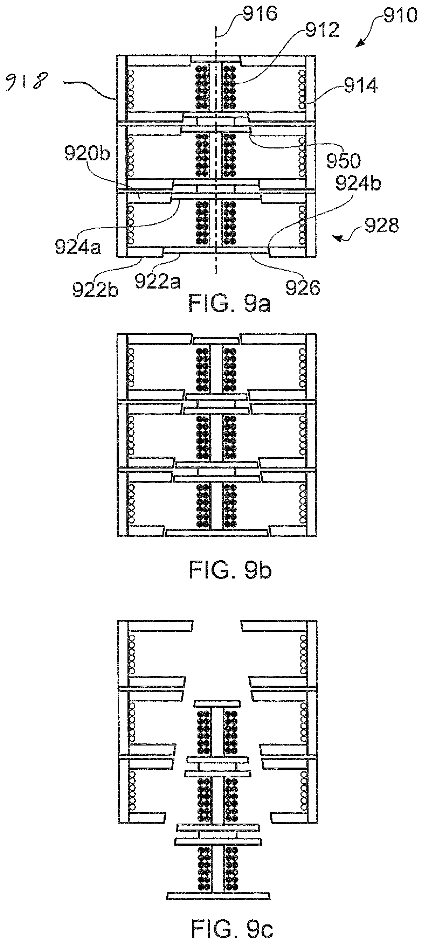

Figures 9a, 9b and 9c show a power transfer device for transferring electrical power from a stationary component to a rotatable component. The power transfer device 910 of this embodiment of the invention is similar in many respects to the earlier described embodiments of the invention. One major difference in this embodiment is that the inner 926 and outer 928 cores contact each other when the device is in a power transfer configuration and are moved axially apart from one another to provide a rotating configuration in which the inner core and outer core are separated and rotatable relative to one another.

In order to provide the power transfer and rotating configurations, the mating boundary 950 of the inner 926 and outer 928 cores are tiered and axially nested such that each successive stage of the inner core 926 radially reduces (or increases as the case may be) along the principal axis 916. This has many advantages. The first is that the magnetic flux path of the core can be mechanically separated to allow rotation by separating the cores along the principal axis. This is particularly advantageous when the device is used as part of a buoyant tidal turbine scheme as is known in the art. The second advantage is that the air gap can be reduced to substantially zero to make for a lower reluctance, more efficient magnetic circuit. A third advantage is that the power transfer device will be self-centring and can potentially be used to help guide the two halves of the power transfer device together.

More specifically, the power transfer device 910 includes a plurality of inner electrical windings 912 and a plurality of outer electrical windings 914 which are radially separated with respect to a principal axis 916 of the power transfer device 910.

Each phase includes a magnetic flux guide in the form of a ferromagnetic core 918 arranged around the inner 912 and outer 914 windings so as to provide a high level of flux linkage when the electrical coils of the windings 912, 914 are energised with an alternating electrical current, AC. Each (single phase) core 918 includes end caps 920, 922 which are axially spaced along the principal axis 916 with the radially inner 912 and outer 914 windings located therebetween.

Each end cap 920, 922 includes an annular divide 924a, 924b which defines respective radially inner 920a, 922a and outer 920b, 922b end cap portions. The annular divide 924 is centred on the principal axis 916 of the power transfer device 910. Thus, there is an inner core 926 and an outer core 928, the inner core 926 being defined by the radially inner end caps 920a, 922a and the inner electrical winding 912, and an outer core 928 being defined by the radially outer end caps 922b, 322b and the outer electrical windings 914.

Notably, the annular divide of the upper end cap 920 has a different radius to the annular divide in the lower end cap 922 for a particular phase core such that the edges which provide the annular divide 924a, 924b of the upper and lower end caps can be defined by a frusto-conical plane, and the respective opposing inner and outer faces of the annular device radially overlap by some extent due to the angle of the taper in the overall shape of the cores such that the inner core cannot pass through the respective end cap of the outer core.

The windings and construction of the inner and outer cores may be the same as the previously described embodiments or may differ. For example, the outer runners may be replaced by a continuous housing rather than discrete arms of the flux guide.

Although the faces of the annular divide 924a, 924b as shown in Figure 9 coincide with the general angle of taper of the cores, it will be appreciated that this need not be the case and the faces can have an angle which is steeper or shallower than the general taper. Further, the faces may include features such as a stepped profile. Further still, the general tapered cross sectional shape of the core may not be constant, but may vary along the axial length of the cores so as to have portions of relatively steeper and shallower taper gradients.

As the arrangement is shown in Figures 9, the outer core is axially separated from the inner core. Thus, the outer core would be connected to the turbine, and the inner core connected to the support. In this case, the outer core winding 914 would be the lower voltage winding. It will be appreciated that the relative connection of the components may be reversed.

It will be understood that by annular it is meant generally annular. As such the divide can follow an undulating, serrated or saw toothed path for instance. Such a path may restrict the number of rotational positions the device can be placed.

In the described embodiment, the outer core 928 is mounted to a turbine and lowered into place over the inner core 926 which is mounted to the support structure coaxially with the longitudinal and vertical axis of the support structure (Figure 9c). Once in place, the opposing annular faces contact each other and power transfer can be begun in this configu ration.

To rotate the cores 926, 928 of the power transfer device 910 and turbine, the turbine and supporting structure are separated (in this case vertically) so that the inner and outer cores are separated and free to rotate with respect to one another (Figure 9b). Once the desired rotation has been completed, inner 926 and outer 928 cores are brought back together by a suitable mechanism to close out the axial separation and bring the cores into contact once again.

It will be appreciated that the direct contact between the opposing faces of the inner and outer cores may be present for only circumferential portions to help reduce problems associated with stiction or the like. Further, the cores may incorporate bearing elements which aid in the relative rotation of the two cores.

Figure 10 shows an embodiment of the power transfer device 1010 in which the inner 1020a, 1022a and outer 1020b, 1022b end caps radially overlap so as to sit one on top of the other. Hence, the inner 1026 and outer 1028 cores have a tiered construction in which subsequent stages of the core have a different radius to the previous stage. In this way, the face surface of an inner core 1026 opposes and abuts a face surface of an outer core 1028 with a radially overlapping portion. Thus, the end caps of corresponding inner and outer cores are not coplanar and the air gap is in a radial plane, rather than an axial one.

Although the above embodiments are described in relation to a sub-aquatic power generating equipment in the form of a tidal turbine, this is not to be taken as a limitation and other sub-aquatic equipment may use the invention.

It will be appreciated that other lamination arrangements may be possible in addition to those described above. For example, the inner core runner may be made from a spiral wound lamination, or the laminations may be wedge shaped so as to extend around an arc of the cylindrical magnetic core.

It will also be appreciated that more than three windings can be included. Some of these windings may be for power transfer of generated electricity or for communication and data transfer purposes.

In examples which are not part of the present invention there may be a power transfer device for transferring power between two relatively rotatable components, comprising: an inner electrical winding and an outer electrical winding which are radially separated with respect to a principal axis; a magnetic flux guide having end caps in the form of laminated discs, the end caps being axially spaced along the principal axis with the inner and outer windings located therebetween, each end cap including an annular air gap centred on the principal axis so as to define respective radially inner and outer end caps, wherein the inner end caps are connected by at least one inner flux guide which passes through the inner winding to form an inner core, and the outer end caps are connected by at least two circumferentially separated outer flux guides so as to form an outer core with the outer winding, wherein the inner and outer cores are mounted so as to be relatively rotatable about the principal axis, and wherein the inner flux guide and outer flux guides are constructed from laminations, the plane of which extend in the direction of the principal axis.

The magnetic flux guide may be arranged to form a substantially closed magnetic circuit around the inner electrical winding. The inner and outer flux guides may include a high permeability material which is recessed into at least one of the respective end caps. The inner and outer electrical windings may have a different numbers of turns. The inner winding may have a lower voltage rating than the outer winding. The inner core may include an open passage which extends between and through the inner end caps.

The inner flux guide may include a plurality of high magnetic permeability laminated members extending along the principal axis between the end caps.

The raidally inner end cap may include a spoked arrangement having a plurality of radially extending high magnetic permeability laminated flux guide members and an annular flux guide member, the radially outer surface of which defines the annular air gap.

The axially extending inner flux guide member and the radially extending flux guide members may be formed from C shaped laminations.

The power transfer device may include a plurality of axially spaced inner and outer cores. The respective inner and outer cores may be substantially magnetically isolated so as to provide a fault tolerant machine.

## Claims

1. An electrical power transfer device (910) for transferring power between two coaxial relatively rotatable cores, comprising:
an outer core (928) having a magnetic flux guide, an outer electrical winding (914) and a cavity for receiving an inner core (926);
the inner core located at least partially within the cavity, the inner core having a magnetic flux guide and an inner winding (912),
wherein the inner and outer cores are coaxially nested along a principal axis (916) and **characterised in that**: the inner and outer cores are arranged to be axially displaceable along the principal axis so as to move between a power transfer configuration in which the magnetic flux guides of the inner and outer cores abut one another for transferring power, and a rotatable configuration in which the inner and outer cores are separated by a first distance for enabling the relative rotation of the inner and outer cores.

2. A power transfer device as claimed in claim 1, wherein the magnetic flux guides of the inner and outer cores have respective end caps (920b, 922b, 922a, 924a) which are axially spaced along the axis of rotation with the inner and outer windings located therebetween, each end cap including corresponding interface surfaces which lie in a plane which is normal to the rotational axis.

3. A power transfer device as claimed in claim 2, wherein the inner and outer end caps at least partially overlap one another in an axial direction relative to the principal axis at the interface.

4. A power transfer device as claimed in any preceding claim having a plurality of inner and outer cores arranged in an axial series.

5. A power transfer device as claimed in claim 4, wherein the inner cores have different sizes so as to be arranged in a tiered construction such that the width of the inner cores increases along the length of the axis.

6. A power transfer device as claimed in any preceding claim wherein the magnetic flux guide of the inner core is an inner magnetic flux guide and the outer core is an outer magnetic flux guide, wherein the inner magnetic flux guide and the outer magnetic flux guide have end caps in the form of laminated discs separated from each other along the axis of rotation and the inner magnetic flux guide has inner core end caps which are connected by at least one inner flux guide, and the outer magnetic flux guide has outer end caps which are connected by at least one outer flux guide, wherein the inner flux guide and outer flux guide are constructed from laminations and have a plane which extends in the direction of the axis.

7. A method of operating the power transfer device as claimed in any preceding claim, comprising the steps of:
placing the inner core in the power transfer configuration relative to the outer core such that the inner and outer cores are axially mating and abutting one another;
axially separating the inner and outer cores to place the cores in the rotatable configuration in which the inner and outer cores are separated by the first distance, wherein;
rotating the inner and outer cores relative to each other;
axially mating the inner and outer cores to place them in the power transfer configuration in a new rotational position of the inner and/or outer core and wherein that the inner and outer cores are abutting one another, and transferring power.

## Patentansprüche

1. Elektrische Leistungsübertragungsvorrichtung (910) zum Übertragen von Leistung zwischen zwei koaxial relativ rotierbaren Kernen, umfassend:
einen äußeren Kern (928) mit einer Magnetstromführung, einer äußeren elektrischen Wicklung (914) und einem Hohlraum zum Aufnehmen eines inneren Kerns (926);
wobei der innere Kern mindestens teilweise im Hohlraum positioniert ist, wobei der innere Kern eine Magnetstromführung und eine innere Wicklung (912) aufweist,
wobei der innere und der äußere Kern koaxial entlang einer Hauptachse (916) eingebettet sind, und **dadurch gekennzeichnet, dass**: der innere und der äußere Kern angeordnet sind, um entlang der Hauptachse axial verschiebbar zu sein, um sich zwischen einer Leistungsübertragungskonfiguration, in der die Magnetstromführungen des inneren und äußeren Kerns zum Übertragen von Leistung aneinander anliegen, und einer rotierbaren Konfiguration, in der der innere und der äußere Kern durch einen ersten Abstand getrennt sind, um die relative Rotation des inneren und des äußeren Kerns zu ermöglichen, zu bewegen.

2. Leistungsübertragungsvorrichtung nach Anspruch 1, wobei die Magnetstromführungen des inneren und des äußeren Kerns jeweilige Endkappen (920b, 922b, 922a, 924a) aufweisen, die axial entlang der Rotationsachse beabstandet sind, wobei die innere und die äußere Wicklung dazwischen positioniert ist, wobei jede Endkappe entsprechende Schnittstellenflächen enthält, die in einer Ebene liegen, die senkrecht zur Rotationsachse ist.

3. Leistungsübertragungsvorrichtung nach Anspruch 2, wobei die inneren und äußeren Endkappen in einer Axialrichtung relativ zur Hauptachse an der Schnittstelle einander mindestens teilweise überlappen.

4. Leistungsübertragungsvorrichtung nach einem der vorstehenden Ansprüche mit einer Vielzahl von inneren und äußeren Kernen, die in axialer Abfolge angeordnet sind.

5. Leistungsübertragungsvorrichtung nach Anspruch 4, wobei die inneren Kerne unterschiedliche Größen aufweisen, um in einer geschichteten Konstruktion angeordnet zu werden, so dass die Breite der inneren Kerne entlang der Länge der Achse zunimmt.

6. Leistungsübertragungsvorrichtung nach einem der vorstehenden Ansprüche, wobei die Magnetstromführung des inneren Kerns eine innere Magnetstromführung ist und der äußere Kern eine äußere Magnetstromführung ist, wobei die innere Magnetstromführung und die äußere Magnetstromführung Endkappen in Form laminierter Scheiben aufweisen, die entlang der Rotationsachse voneinander getrennt sind, und die innere Magnetstromführung innere Kernendkappen aufweist, die durch mindestens eine innere Stromführung miteinander verbunden sind, und die äußere Magnetstromführung äußere Endkappen aufweist, die durch mindestens eine äußere Stromführung miteinander verbunden sind, wobei die innere Stromführung und die äußere Stromführung aus Laminierungen konstruiert sind und eine Ebene aufweisen, die sich in der Richtung der Achse erstreckt.

7. Verfahren zum Betreiben der Leistungsübertragungsvorrichtung nach einem der vorstehenden Ansprüche, umfassend die folgenden Schritte:
Platzieren des inneren Kerns in der Leistungsübertragungsvorrichtung relativ zum äußeren Kern, so dass der innere Kern und der äußere Kern axial aufeinander ausgerichtet sind und aneinander anliegen;
axiales Trennen des inneren und des äußeren Kerns, um die Kerne in die rotierbare Konfiguration zu platzieren, in der der innere Kern und der äußere Kern durch den ersten Abstand voneinander getrennt sind, wobei;
Rotieren des inneren und des äußeren Kerns relativ zueinander; axiales Ausrichten des inneren und des äußeren Kerns, um sie in einer neuen Rotationsposition des inneren und/oder äußeren Kerns in die Leistungsübertragungskonfiguration zu setzen, und wobei dass der innere und der äußere Kern aneinander anliegen und Leistung übertragen.

## Revendications

1. Dispositif de transfert de puissance électrique (910) destiné au transfert de puissance entre deux noyaux coaxiaux pouvant tourner de manière relative, comprenant :
un noyau externe (928) possédant un guide de flux magnétique, un enroulement électrique externe (914) et une cavité destinée à recevoir un noyau interne (926) ;
ledit noyau interne étant situé au moins partiellement dans la cavité, ledit noyau interne possédant un guide de flux magnétique et un enroulement interne (912),
lesdits noyaux interne et externe étant emboîtés coaxialement le long d'un axe principal (916) et **caractérisé en ce que** : les noyaux interne et externe sont agencés pour être mobile axialement le long de l'axe principal de façon à se déplacer entre une configuration de transfert de puissance dans laquelle les guides de flux magnétique des noyaux interne et externe sont en butée l'un contre l'autre en vue du transfert de puissance et une configuration rotative dans laquelle les noyaux interne et externe sont séparés par une première distance pour permettre la rotation relative des noyaux interne et externe.

2. Dispositif de transfert de puissance selon la revendication 1, lesdits guides de flux magnétique des noyaux interne et externe étant des embouts d'extrémité respectifs (920b, 922b, 922a, 924a) qui sont espacés axialement le long de l'axe de rotation, lesdits enroulements interne et externe étant situés entre ceux-ci, chaque embout d'extrémité comprenant des surfaces d'interface correspondantes qui se trouvent dans un plan qui est normal à l'axe de rotation.

3. Dispositif de transfert de puissance selon la revendication 2, lesdits embouts d'extrémité interne et externe se chevauchant au moins partiellement l'un et l'autre selon une direction axiale par rapport à l'axe principal au niveau de l'interface.

4. Dispositif de transfert de puissance selon l'une quelconque des revendications précédentes possédant une pluralité de noyaux internes et externes agencés en une série axiale.

5. Dispositif de transfert de puissance selon la revendication 4, lesdits noyaux internes présentant différentes tailles de façon à être agencés en une structure étagée de sorte que la largeur des noyaux internes augmentent le long de la longueur de l'axe.

6. Dispositif de transfert de puissance selon l'une quelconque des revendications précédentes, ledit guide de flux magnétique du noyau interne étant un guide de flux magnétique interne et ledit noyau externe étant un guide de flux magnétique externe, ledit guide de flux magnétique interne et ledit guide de flux magnétique externe possédant des embouts d'extrémité sous la forme de disques stratifiés séparés les uns des autres le long de l'axe de rotation et le guide de flux magnétique interne possédant des embouts d'extrémité de noyau interne qui sont raccordés par au moins un guide de flux interne et ledit guide de flux magnétique externe possédant des embouts d'extrémité externes qui sont raccordés par au moins un guide de flux externe, ledit guide de flux interne et ledit guide de flux externe étant constitués de tôles et possédant un plan qui s'étend selon la direction de l'axe.

7. Procédé de fonctionnement du dispositif de transfert de puissance selon l'une quelconque des revendications précédentes, comprenant les étapes de :
mise en place du noyau interne dans la configuration de transfert de puissance par rapport au noyau externe de sorte que les noyaux interne et externe soient accouplés axialement et en butée l'un contre l'autre ;
séparation de façon axiale des noyaux interne et externe pour mette en place des noyaux dans la configuration rotative dans laquelle les noyaux interne et externe sont séparés par la première distance,
ladite rotation des noyaux interne et externe l'un par rapport à l'autre ; ledit accouplement de façon axiale des noyaux interne et externe pour les mettre en place dans la configuration de transfert de puissance selon une nouvelle position de rotation du noyau interne et/ou du noyau externe et dans laquelle les noyaux interne et externe sont en butée l'un contre l'autre et ledit transfert de puissance.
